# EUROPÄISCHE PATENTSCHRIFT

(11) **EP 1 726 842 B1**
(45) Veröffentlichungstag und Bekanntmachung des Hinweises auf die Patenterteilung: **02.09.2009**
(21) Anmeldenummer: 05011339.8
(22) Anmeldetag: 25.05.2005
(51) Int. Cl.: F16D 25/10

(54) **Kupplungsanordnung in radial geschachtelter Bauart**
Clutch assembly with radially adjoining clutches
Ensemble embrayage avec embrayages voisins dans le sens radial.

(43) Veröffentlichungstag der Anmeldung: 29.11.2006
(73) Patentinhaber: BorgWarner, Inc., Auburn Hills, MI 48326-2872 (US)
(72) Erfinder: Gerlach, Martin, 68526 Ladenburg (DE)
(74) Vertreter: Braunger, Dieter

(56) Entgegenhaltungen:
- GB-A- 1 388 766
- US-A- 3 922 932
- US-A- 4 440 282
- US-A1- 2005 103 594

## Beschreibung

Die Erfindung betrifft eine Kupplungsanordnung in radial geschachtelter Bauart nach dem Oberbegriff des Patentanspruchs 1.

Mehrfachkupplungen für Kraftfahrzeuge werden häufig nach der Art ihrer Reibpartner in trockene oder nasse, d.h. mittels flüssigem Kühlmedium gekühlte, Kupplungen unterschieden. Man kann Mehrfachkupplungen, insbesondere Doppelkupplungen, auch nach ihrer Anordnung unterscheiden. Insbesondere bei den nassen Doppelkupplungen gibt es die radial ineinander geschachtelte Bauart ("konzentrische Anordnung"), bei der die beim Betätigen in Reibschluss verbrachten Reibscheiben einer radial äußeren Kupplung die entsprechenden Reibscheiben einer radial inneren Kupplung umschließen, und die axial hintereinander angeordnete Bauart, bei der die Reibscheiben der Kupplungen längs einer gemeinsamen Drehachse hintereinander angeordnet sind ("parallele Anordnung").

Eine Mehrfachkupplung in paralleler Bauart entnimmt man z.B. dem Dokument EP 1 195 537 A1. Mehrfachkupplungen in radial geschachtelter Bauart, auf die sich die Erfindung bezieht, sind z.B. in der EP 0 758 434 B1, der DE 101 11 202 A1, der DE 102 31 405 A1, der DE 102 22 933 A1, der DE 203 10 015 U1, der DE 102 03 618 A1, der DE 102 23 892 A1, der DE 100 04 186 A1 oder der DE 100 04 189 A1 beschrieben.

Die in diesen Dokumenten vorgestellten Kupplungen umfassen eine erste, nachfolgend als radial äußere Lamellenkupplung bezeichnete Kupplung mit einem wenigstens eine Außenlamelle tragenden Außenlamellenträger und mit einem wenigstens eine Innenlamelle tragenden Innenlamellenträger sowie eine zweite, nachfolgend als radial innere Lamellenkupplung bezeichnete Kupplung mit einem wenigstens eine Außenlamelle tragenden Außenlamellenträger und mit einem wenigstens eine Innenlamelle tragenden Innenlamellenträger. Die Lamellen der radial äußeren Lamellenkupplung und die Lamellen der radial inneren Lamellenkupplung drehen sich um eine gemeinsame Drehachse. Die Lamellen der radial äußeren Lamellenkupplung sind dabei radial außerhalb der Lamellen der radial inneren Lamellenkupplung angeordnet, wobei die Lamellen der radial äußeren Lamellenkupplung und die Lamellen der radial inneren Lamellenkupplung in der Regel im gleichen axialen Abschnitt angeordnet sind, so dass die Lamellen der radial äußeren Lamellenkupplung die Lamellen der radial inneren Lamellenkupplung radial umgreifen. Jede Kupplung umfasst einen Betätigungskolben, mit dessen Hilfe die Lamellen der jeweiligen Kupplung in Reibschluss verbracht werden können. Jeder Betätigungskolben ist von einem entsprechenden Zylinder axial verschieblich geführt. Zylinder und Betätigungskolben bilden jeweils einen sogenannten Druckraum, welcher mittels eines Fluids, insbesondere mit Hilfe von Hydraulikflüssigkeit, mit einem Druck beaufschlagt werden kann, um die Lamellen in (oder ggf. auch außer) Reibeingriff zu verbringen. Häufig ist zusätzlich einem oder beiden Betätigungskolben ein sogenannter Ausgleichskolben zugeordnet. Betätigungskolben und Ausgleichskolben bilden einen sogenannten Ausgleichsraum. Diesem Ausgleichsraum ist ebenfalls ein Fluid zuführbar oder mit einem Fluid, also z.B. Hydraulikflüssigkeit, befüllt. Das in diesem Ausgleichsraum befindliche Fluid dient dazu, eine mit zunehmender Drehzahl auftretende fliehkraftbedingte Drucküberhöhung im Druckraum (weitgehend) auszugleichen. In manchen Fällen kann auch eine Unter- oder Überkompensation dieser Drucküberhöhung wünschenswert sein.

Die in den vorstehend genannten Dokumenten vorgestellten Kupplungen sind hinsichtlich unterschiedlichster Parameter optimiert. Daher unterscheiden sie sich zum Teil erheblich im Bauraumbedarf.

Bei den meisten der in den vorstehend genannten Druckschriften dargestellten und beschriebenen Mehrfachkupplungen, insbesondere Doppelkupplungen, sind die einzelnen Lamellenträger als separate Bauteile ausgeführt. In der rechten Hälfte der Figur 1 der EP 0 758 434 B1, von der die Erfindung ausgeht, ist eine Doppelkupplungsanordnung in radial geschachtelter Bauart dargestellt, bei welcher die radial äußere Lamellenkupplung und die radial innere Lamellenkupplung einen gemeinsamen Lamellenträger aufweisen, welcher die Außenlamellen der radial inneren Lamellenkupplung und die Innenlamellen der radial äußeren Lamellenkupplung trägt. Der gemeinsame Lamellenträger erfährt also eine doppelte Nutzung nämlich als Innenlamellenträger der radial äußeren Kupplung und als Außenlamellenträger der radial inneren Lamellenkupplung.

Sowohl der Außenlamellenträger der radial äußeren Lamellenkupplung als auch der Außenlamellenträger der radial inneren Lamellenkupplung tragen Stahllamellen. Die Innenlamellenträger beider Kupplungen tragen sogenannte Reiblamellen, welche auf beiden Stirnseiten mit einem Reibbelag versehen sind. Zum Aufbringen der Gegenkraft auf die jeweiligen Lamellenpakete beim Betätigen der Kupplungen durch den jeweils zugeordneten Betätigungskolben sind Endscheiben vorgesehen, welche das Lamellenpaket auf der dem jeweiligen Betätigungskolben gegenüberliegenden Seite abschließen bzw. abstützen. Diese Endscheiben werden in beiden Kupplungen von Stahllamellen gebildet, welche vom jeweiligen Außenlamellenträger getragen werden und welche vermittels eines Sicherungsrings anschlagbegrenzt sind.

Obwohl sich jede der Kupplungen für den jeweiligen in den vorstehend genannten Druckschriften beschriebenen Anwendungsfall dem Grunde nach bewährt hat, besteht weiterhin Verbesserungsbedarf.

Als weiterer Stand der Technik wird US 2005/0103594 A1 genannt.

Der Erfindung liegt daher die Aufgabe zugrunde den Bauraum möglichst klein zu halten, die Anzahl der zur Bildung der Kupplungsanordnung notwendigen Bestandteile gering zu halten und die Fertigung möglichst einfach zu gestalten.

Diese Aufgabe wird durch die Merkmale des kennzeichnenden Teils des Patentanspruchs 1 gelöst.

Vorteilhafte Ausgestaltungen und Weiterbildungen der Erfindung sind in den entsprechenden Unteransprüchen angegeben.

Die Erfindung beruht auf der Idee, (notwendige) Bestandteile der radial inneren Kupplung soweit wie möglich für die radial äußere Kupplung nutzbar zu machen und umgekehrt. Dies wird dadurch erreicht, dass für die radial innere Lamellenkupplung und die radial äußere Lamellenkupplung zur axialen Abstützung der Schließkräfte beider Kupplungen eine gemeinsame Endscheibe vorgesehen ist. Neben einer Reduzierung der für die Mehrfachkupplung erforderlichen Einzelkomponenten geht damit eine Reduzierung der Anzahl der Herstellungsschritte für die Endscheibe(n) als solche als auch eine Reduzierung der Anzahl der notwendigen Montageschritte bei entsprechender Ausführung der gemeinsamen Endscheibe einher.

Aus der EP 0 758 434 B1, die eine Kupplungsanordnung gemäß dem Oberbegriff des Anspruchs 1 offenbart, ist es bekannt, separate Endscheiben zur Abstützung der jeweiligen Lamellenpakete radial geschachtelt angeordneter Kupplungen vorzusehen. Die Endscheiben werden dabei sowohl bei der radial äußeren Lamellenkupplung als auch bei der radial inneren Kupplung von den jeweiligen Außenlamellenträgern getragen und mittels Sicherungsringe bzw. Sprengringe anschlagbegrenzt. Bei der erfindungsgemäßen Lösung bietet es sich an, wenn die gemeinsame Endscheibe entweder Bestandteil des gemeinsamen Lamellenträgers ist oder wenn die gemeinsame Endscheibe an dem gemeinsamen Lamellenträger angebracht ist. In einer besonders vorteilhaften Ausführungsvariante sieht die Erfindung daher vor, dass die gemeinsame Endscheibe drehfest mit dem gemeinsamen Lamellenträger verbunden ist oder dass die gemeinsame Endscheibe einstückig mit dem gemeinsamen Lamellenträger ausgeführt ist.

Bei letzter Variante wird allein durch die Formgebung des Lamellenträgers z.B. an einem offenen Ende die Funktionalität der Abstützung der jeweiligen Lamellenpakete der radial äußeren Lamellenkupplung und der radial inneren Lamellenkupplung erzielt. Der gemeinsame Lamellenträger wird dabei vorzugsweise mit Hilfe eines Form- oder Ziehverfahrens hergestellt.

Die erstgenannte Variante der lediglich drehfesten Verbindung von gemeinsamem Lamellenträger und gemeinsamer Endscheibe lässt sich durch eine einfache Verzahnungsverbindung realisieren. Derartige korrespondierende Verzahnungen sind aus dem Kupplungs- und Dämpferbau in vielerlei Ausführungsvarianten bekannt. Beispielhaft wird auf folgende Realisierungsvariante hingewiesen: Die gemeinsame Endscheibe kann wenigstens eine Öffnung, vorzugsweise jedoch mehrere, z.B. auf einem gedachten Kreis angeordnete, Öffnungen aufweisen. Diese Öffnungen sind so angeordnet, dass durch diese entsprechende, vorzugsweise in Richtung zu einer Drehachse des gemeinsamen Lamellenträgers ausgerichtete, Stege hindurchgeführt werden können. Passen die Stege (bzw. ggf. auch nur ein Steg) zumindest in Umfangsrichtung im wesentlichen formschlüssig in die Öffnungen, so lässt sich die Endscheibe nicht gegenüber dem gemeinsamen Lamellenträger verdrehen.

Verbindet man den gemeinsamen Lamellenträger mit der gemeinsamen Endplatte mit Hilfe korrespondierender Verzahnungen drehfest, so genügt in der Regel eine axiale Sicherung mittels eines in eine Nut eingelegten Sicherungsrings. Bei der konkreten Ausführung der vorstehend beschriebenen Art ist erfindungsgemäß vorgesehen, dass der gemeinsame Lamellenträger eine Umfangsnut zur Aufnahme eines Sicherungsrings aufweist, mit Hilfe dessen die Verschiebbarkeit der gemeinsame Endscheibe in eine axiale Richtung begrenzt ist.

Die Endscheibe ist vorzugsweise so gestaltet, dass sie den möglicherweise unterschiedlichen maximalen Kräfteverhältnisse der jeweiligen Kupplung Rechnung trägt. Außerdem kann das in der europäischen Patent veröffentlichung No. 04 006 276.2 bekannte Verfahren zur optimalen Reibradiengestaltung in die Gestaltung der gemeinsamen Endscheibe einfließen und problemlos umgesetzt werden.

In einer besonders vorteilhaften Ausführungsvariante der Erfindung ist daher vorgesehen, dass die gemeinsame Endscheibe eine erste Ringkuppe aufweist, um einen mittleren Kraftangriffsradius an einer zu der gemeinsamen Endscheibe benachbarten Lamelle der radial äußeren Lamellenkupplung oder der radial inneren Lamellenkupplung einzustellen, wenn die erste Ringkuppe mit der benachbarten Lamelle der entsprechenden Lamellenkupplung in Kontakt ist. Durch diese Maßnahme und durch geeignete Wahl des Radius der Ringkuppe kann der (Gegen-) Krafteintrag aufgrund der Betätigung der entsprechenden Kupplung mittels des Betätigungskolbens so gewählt werden, dass die Kupplung eine gewünschte Reibwirkung erzeugt und/oder dass die einzelnen Lamellen eines Lamellenpakets beim Betätigen einer vorbestimmten Reibbeanspruchung und/oder Temperaturbeanspruchung ausgesetzt sind.

Der Lehre der vorstehend angegebenen europäischen Patent veröffentlichung No. 04 006 276.2 folgend kann die gemeinsame Endscheibe zusätzlich wenigstens eine weitere Ringkuppe aufweisen, um wenigstens einen weiteren mittleren Kraftangriffsradius an der zu der gemeinsamen Endscheibe benachbarten Lamelle der entsprechenden Lamellenkupplung einzustellen, wenn die wenigstens eine weitere Ringkuppe zusätzlich oder alternativ zu der ersten Ringkuppe (z.B. jeweils durch Überdrücken der ersten Ringkuppe) mit der benachbarten Lamelle der entsprechenden Lamellenkupplung in Kontakt ist. Auf diese Weise lässt sich die Reibbeanspruchung und/oder die Temperaturbeanspruchung der einzelnen Lamellen eines Lamellenpakets in gewünschter Weise einstellen.

Wird der gemeinsame Lamellenträger in einem Zieh- oder Biegeverfahren aus einem Blech oder dergleichen hergestellt, so entseht bei der Formgebung einer Verzahnung (z.B. der Außenverzahnung) automatisch die andere Verzahnung (also im Beispiel die Innenverzahnung) mit. Die einzige eingebrachte Verzahnung kann also sowohl zur Aufnahme der Innenverzahnung der Innenlamellen der äußeren Kupplung als auch zur Aufnahme der Außenverzahnung der Außenlamellen der radial inneren Lamellenkupplung verwendet werden. Es braucht folglich auch nur eine Verzahnung vorgesehen zu sein, welche am Außenumfang des gemeinsamen Lamellenträgers einen Eingriff einer entsprechenden Innenverzahnung der Innenlamellen der radial äußeren Kupplung und am Innenumfang des gemeinsamen Lamellenträgers einen Eingriff einer entsprechenden Außenverzahnung der Innenlamellen der radial inneren Kupplung ermöglicht.

Der gemeinsame Lamellenträger weist demnach in einer vorteilhaften Ausführungsform einen holzylinderförmigen Abschnitt mit mäanderartigem Querschnitt auf, so dass außenumfangsseitig eine Außenverzahnung zur Aufnahme einer Innenverzahnung der Innenlamellen der radial äußeren Lamellenkupplung und innenumfangsseitig eine Innenverzahnung zur Aufnahme einer Außenverzahnung der Außenlamellen der radial inneren Lamellenkupplung gebildet wird.

Der Vollständigkeit halber wird in diesem Zusammenhang darauf hingewiesen, dass sich eine derartige Ausführungsvariante eines gemeinsamen Lamellenträgers auch für die Kombination mit einer gemeinsamen Endplatte der oben beschriebenen und ebenfalls erfindungsgemäßen Art eignet.

Die Erfindung wird nunmehr anhand der Zeichnung näher beschrieben. Es zeigen:
- Figur 1:: ein Ausführungsbeispiel einer erfindungsgemäßen Doppelkupplung in radial geschachtelter Anordnung im Axialhalbschnitt,
- Figur 2:: einen Querschnitt der Doppelkupplung im Bereich des hohlzylinderförmigen Abschnitts des gemeinsamen Innenlamellenträgers.

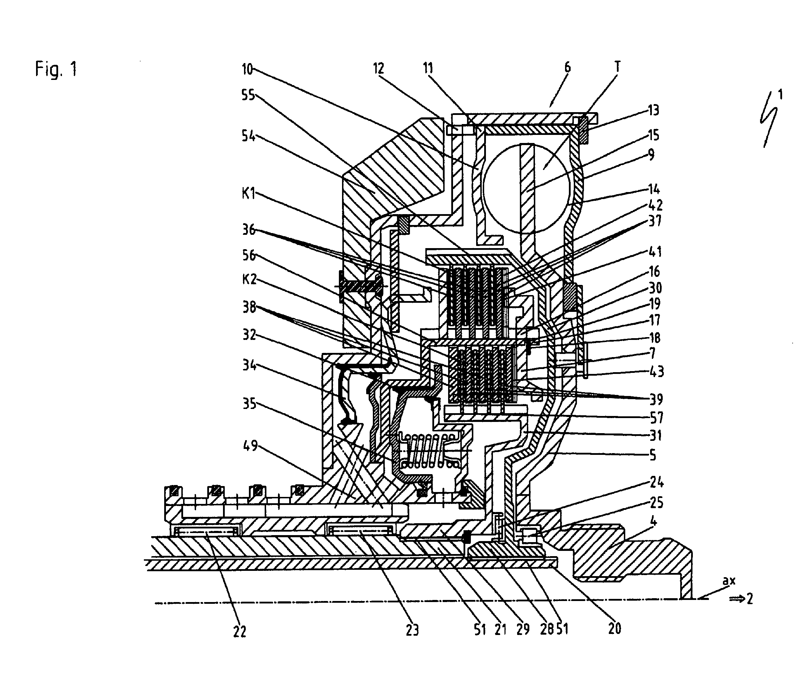

Die Figur 1 zeigt ein Ausführungsbeispiel einer Doppelkupplungseinrichtung 1 mit Torsionsschwingungsdämpfer T und erfindungsgemäßer Doppelkupplung K1, K2 in radial geschachtelter Anordnung im Axialhalbschnitt.

Der Torsionsschwingungsdämpfer T gemäß dieser Zeichnungsfigur 1 ist grundsätzlich in an sich üblicher Art und Weise ausgebildet. Er umfasst ein Primärelement 5 in der Art einer Scheibe sowie ein Sekundärelement 6 mit im vorliegenden Ausführungsbeispiel zwei Halbschalen 9, 10, welche miteinander drehfest verbunden sind. Primär- und Sekundärelemente 5, 6 sind über eine Federeinrichtung miteinander gekoppelt und um eine Neutralposition gegeneinander verdrehbar. Die Federeinrichtung besteht im vorliegenden Ausführungsbeispiel aus einer Mehrzahl in Umfangsrichtung hintereinander angeordneter Schraubenfedern 15, welche mit Hilfe von sogenannten hier nicht dargestellten Gleitschuhen/Federaufteilern voneinander beabstandet sind.

Primär- und Sekundärelemente 5, 6 umfassen jeweils in diametraler Anordnung zwei Mitnehmer, welche jeweils zwischen die in Umfangsrichtung verlaufende Kette der Schraubenfedern 14 eingreifen, so dass ein antriebsseitig am Primärelement 5 anliegendes Drehmoment mittels jeweils eines in der Figur 1 dargestellten Primärmitnehmers 15 zunächst auf die aus den Schraubenfedern 14 bestehende Federkette und von dort auf den jeweiligen hier nicht dargestellten Sekundärmitnehmer des Sekundärelements 6 übertragen wird.

Wie oben bereits erwähnt, umfasst das Sekundärelement 6 zwei Einzelteile, nämlich eine antriebsseitige Halbschale 9 und eine abtriebsseitige Halbschale 10. Die beiden Halbschalen 9, 10 sind derart ausgebildet, dass sie die aus Schraubenfedern 14 bestehende Kette im Wesentlichen formschlüssig aufnehmen. Beide Halbschalen 9, 10 sind über eine Verzahnung 11 drehfest miteinander verbunden. Diese beiden Halbschalen 9, 10 dienen zur vorzugsweise reibungsarmen Führung der Federn 14 bzw. der wischen den Federn 14 in Umfangsrichtung angeordneten Gleitschuhe/Federaufteiler.

Auch die Doppelkupplung in radial geschachtelter Anordnung ist in an sich üblicher Weise aufgebaut. Sie umfasst eine radial äußere Kupplung K1 und eine radial innere Kupplung K2.

Die radial äußere Kupplung K1 umfasst einen Außenlamellenträger 30 sowie einen Innenlamellenträger 32. Beide Lamellenträger 30, 32 sind in der Art von Halbschalen ausgebildet. Der zylindrische Teil 55 des Außenlamellenträgers 30 weist am Innenumfang eine Verzahnung 26 auf. In diese Verzahnung 26 greift jeweils eine entsprechende Außenverzahnung 58 von im vorliegenden Ausführungsbeispiel als Stahllamellen ausgeführten Außenlamellen 36 ein. In korrespondierender Weise weist der zylindrische Teil 56 des Innenlamellenträgers 32 an dessen Außenumfang eine Verzahnung 46 auf, in welche eine entsprechende Innenverzahnung 44 hier als Belaglamellen ausgeführter Innenlamellen 37 eingreift. Außenlamellen 36 und Innenlamellen 37 sind derart zwischen die zylindrischen Bereiche der Außen- bzw. Innenlamellenträger 30, 32 eingeführt, dass jeweils auf eine Außenlamelle 36 eine Innenlamelle 37 folgt und umgekehrt. Die Außen- und Innenlamellen 36, 37 sind mittels eines Betätigungskolbens 34 in Reibeingriff und außer Reibeingriff verbringbar.

Die radial innere Kupplung K2 ist in an sich gleicher Weise ausgeführt. Auch hier ist ein halbschalenförmiger Außenlamellenträger 32 und ein halbschalenförmiger Innenlamellenträger 31 vorgesehen. Der halbschalenförmige Außenlamellenträger 32 wird dabei durch den die Innenlamellen 37 der radial äußeren Kupplung K1 tragenden Innenlamellenträger 32 gebildet. Es existiert also lediglich ein gemeinsamer Lamellenträger 32, welcher sowohl die Innenlamellen 37 der radial äußeren Kupplung K1 als auch die Außenlamellen 38 der radial inneren Kupplung K2 trägt.

Der zylindrische Teil dieses gemeinsamen Lamellenträgers 32 weist innenumfangsseitig eine Verzahnung 47 auf, in welche eine Außenverzahnung 45 entsprechender als Stahllamellen ausgeführter Außenlamellen 38 eingreifen. Korrespondierend hierzu weist der zylindrische Abschnitt 57 der Innenlamellenträgerhalbschale 31 eine Außenverzahnung 27 auf, welche die Innenverzahnungen 59 entsprechender Innenlamellen 39 aufnehmen kann. Eine Innenlamelle 39 ist hiermit wechselweise benachbart zu einer Außenlamelle 38 ein Lamellenpaket bildend angeordnet. Die Außen- und Innenlamellen 38, 39 können mit Hilfe eines Betätigungskolbens 35 in Reibeingriff und außer Reibeingriff verbracht werden.

Die Lamellenpakete der radial äußeren Kupplung K1 und der radial inneren Kupplung K2 sind zueinander im radial geschachtelter Weise angeordnet. Dies bedeutet, dass sich das Lamellenpaket der radial inneren Kupplung K2 radial innerhalb des Lamellenpakets der radial äußeren Kupplung K1 und in etwa im gleichen axialen Abschnitt wie das Lamellenpaket der radial äußeren Lamellenkupplung K1 befindet.

Der gemeinsame Lamellenträger 32 der radial äußeren Kupplung K1 und der radial inneren Kupplung K2 ist drehfest mit einer Kupplungsnabe 49 verbunden. Diese Kupplungsnabe 49, welche im Wesentlichen die Form eines Zylinders aufweist, ist um eine Drehachse ax am Außenumfang einer Getriebeeingangswelle 21 drehbar gelagert. Die drehbare Lagerung erfolgt über zwei Radialnadellager 22, 23.

Die Getriebeeingangswelle 21 ist in der Form eines Hohlzylinders ausgeführt. Sie ist von einer weiteren als Vollwelle ausgeführten Getriebeeingangswelle 22 zentral durchsetzt. Auf einer mit dieser inneren Getriebeeingangswelle 20, der Vollwelle, drehfest verbundenen Nabe 28 ist das Primärelement 5 des Torsionsschwingungsdämpfers T mit Hilfe eines entsprechenden Primärflanschs 4 um die gemeinsame Drehachse ax drehbar gelagert. Die Lagerung ist im vorliegenden Ausführungsbeispiel mit Hilfe eines Radialnadellagers 25 realisiert.

Die beiden Getriebeeingangswellen, nämlich die Hohlwelle 21 und die Vollwelle 20, sind drehfest jeweils mit einem Lamellenträger 30, 31 einer der beiden Kupplungen K1, K2 verbunden. Insbesondere ist der Außenlamellenträger 30 der radial äußeren Lamellenkupplung K1 mit der Vollwelle 20 und der Innenlamellenträger 31 der radial inneren Kupplung K2 mit der Hohlwelle 21 drehbar verbunden. Zu diesem Zweck weisen die Lamellenträger 30, 31 entsprechende Naben 28, 29 auf, welche an ihrem jeweiligen Innenumfang jeweils eine Steckverzahnung 51, 52 zur Aufnahme entsprechender Verzahnungen der Getriebeeingangswellen 20, 21 aufweisen. Die beiden Lamellenträger, nämlich der Außenlamellenträger 30 der radial äußeren Lamellenkupplung K1 und der Innenlamellenträger 31 der radial inneren Lamellenkupplung K2 sind im Nabenbereich mittels eines Axialnadellagers 24 gegeneinander drehbar geführt.

Die Kupplungsnabe 49 und der mit dieser drehfest verbundene gemeinsame Lamellenträger 30 der radial äußeren Kupplung K1 und der radial inneren Kupplung K2 stellen nunmehr die Eingangsseite der Doppelkupplung dar. Der Außenlamellenträger 30 der radial äußeren Lamellenkupplung K1 und der Innenlamellenträger 31 der Kupplung K2 bilden die Ausgangsseiten der Doppelkupplung. Ein über die Kupplungsnabe 49 bzw. den gemeinsamen Lamellenträger 32 eingeleitetes Drehmoment kann demzufolge wahlweise je nach Stellung der beiden Betätigungskolben 34, 35 auf eine der beiden Lamellenträger 31 oder 30 übertragen und von dort weiter über die entsprechenden Naben 28, 29 auf die Getriebeeingangswellen 20, 21 ausgeleitet werden.

Um ein z.B. von einem hier nicht dargestellten Verbrennungsmotor erzeugtes und auf eine ebenfalls nicht dargestellte Kurbelwelle 2 gegebenes Drehmoment über den Torsionsschwingungsdämpfer T auf die Doppelkupplung und von dort weiter auf eine der beiden Getriebeausgangswellen 20, 21 übertragen zu können, bedarf es einer drehfesten Kopplung zwischen Torsionsschwingungsdämpfer T und Doppelkupplung K1, K2. Diese Kopplung ist im vorliegenden Ausführungsbeispiel dadurch realisiert, dass an die Kupplungsnabe 49 ein halbschalenförmiges Gehäuseteil 54 angeschraubt ist, welches die Kupplungen K1, K2 und den Torsionsschwingungsdämpfer T axial übergreift und welches über eine Verzahnung 12 mit dem Sekundärelement 6 drehfest verbunden ist. Zur axialen Sicherung ist ein Sicherungsring 13 vorgesehen, welcher die gesamte Baueinheit 1 aus Torsionsschwingungsdämpfer T und Doppelkupplung K1, K2 gegeneinander axial im wesentlichen unverschieblich hält.

Die Erfindung bezieht sich nunmehr im wesentlichen auf zwei Aspekte der Doppelkupplung in radial geschachtelter Anordnung.

Der erste Aspekt bezieht sich auf die Ausführung des gemeinsamen Lamellenträgers 32. Wie oben bereits erläutert wurde umfasst der gemeinsame Lamellenträger 32 einen hohlzylinderförmigen Abschnitt 56, welcher Verzahnungen 46, 47 aufweist, um entsprechende Verzahnungen 44 der Innenlamellen 37 der radial äußeren Lamellenkupplung K1 sowie Verzahnungen 45 der Außenlamellen 38 der radial inneren Lamellenkupplung K2 aufzunehmen.

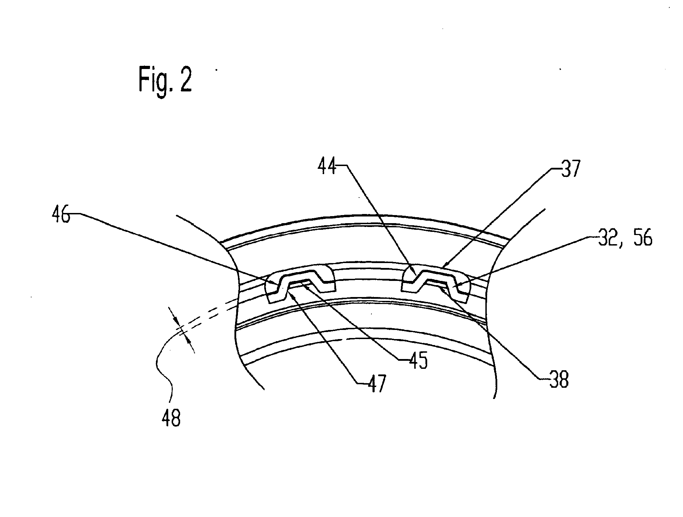

Die Figur 2 zeigt diesen hohlzylinderförmigen Abschnitt 56 des gemeinsamen Lamellenträgers 32 im Querschnitt. Aus der Figur 2 entnimmt man, dass der gemeinsame Lamellenträger 32 einen hohlzylinderförmigen Abschnitt 56 mit mäanderartigem Querschnitt aufweist, so dass gleichzeitig einerseits außenumfangsseitig eine Außenverzahnung 46 zur Aufnahme einer Innenverzahnung 44 der Innenlamellen 37 der radial äußeren Lamellenkupplung K1 und andererseits innenumfangsseitig eine Innenverzahnung 47 zur Aufnahme einer Außenverzahnung 45 der Außenlamellen 38 der radial inneren Lamellenkupplung K2 gebildet wird. Diese Gestalt des gemeinsamen Lamellenträgers 32 ermöglicht also die doppelte Nutzung (innen und außen) der durch die Mäanderform gebildeten Lamellenträgerverzahnung.

Der zweite Aspekt der Erfindung betrifft die axialen Abstützplatten gegen die sich die jeweiligen Lamellenpakete im Falle einer Betätigung der entsprechenden Kupplungen K1, K2 abstützen, die sogenannten Endplatten. Während gemäß dem Stand der Technik jede Kupplung K1, K2 eine eigene Endplatte zur Abstützung aufweist, ist erfindungsgemäß eine gemeinsame Endplatte 7 vorgesehen, gegen die sich sowohl das Lamellenpaket der radial inneren Lamellenkupplung K2 als auch das Lamellenpaket der radial äußeren Lamellenkupplung K1 endseitig abstützen.

Die gemeinsame Endscheibe 7 weist zur Herstellung einer drehfesten Verbindung zwischen der gemeinsamen Endscheibe 7 und dem gemeinsamen Lamellenträger 32 mehrere auf einem gedachten Kreis angeordnete Öffnungen 16 auf, durch welche entsprechende in Richtung zu der Drehachse ax des gemeinsamen Lamellenträgers 32 ausgerichtete Stege 17 geführt sind. Der gemeinsame Lamellenträger 32 weist eine Umfangsnut 19 zur Aufnahme eines Sicherungsrings 18 auf, mit Hilfe dessen die Verschiebbarkeit der gemeinsame Endscheibe 7 in axialer Richtung ax begrenzt wird.

Der der inneren Kupplung K2 zugeordnete Teil der gemeinsamen Endscheibe 7 weist eine Ringkuppe 43 auf, um einen mittleren Kraftangriffsradius an der zu der benachbarten Lamelle der radial inneren Lamellenkupplung einzustellen. Der der radial äußeren Kupplung K1 zugeordnete Abschnitt der gemeinsamen Endscheibe 7 weist sogar zwei Ringkuppen 41, 42 auf, so dass je nach Krafteintrag durch den Betätigungskolben 34 entweder die radial äußere Ringkuppe 42 oder die radial innere Ringkuppe 41 zur Anlage mit der benachbarten Innenlamelle kommt. Auf diese Weise stellt sich abhängig vom Krafteintrag durch den Betätigungskolben 34 ein anderer mittlerer Kraftangriffsradius ein.

### Bezugszeichenliste

- 1: Doppelkupplungseinrichtung
- 2: Kurbelwelle
- 4: Primärflansch
- 5: Primärelement
- 6: Sekundärelement
- 7: gemeinsame Endplatte
- 9: antriebsseitige Halbschale
- 10: abtriebsseitige Halbschale
- 11: Verzahnung
- 12: Verzahnung
- 13: Sicherungsring
- 14: Schraubenfeder
- 15: Primärmitnehmer
- 16: Öffnung
- 17: Steg
- 18: Sicherungsring
- 19: Umfangsnut
- 20: Vollwelle
- 21: Hohlwelle
- 22: Radialnadellager
- 23: Radialnadellager
- 24: Axialnadellager
- 25: Radialnadellager
- 26: Innenverzahnung
- 27: Außenverzahnung
- 28: Nabe des Außenlamellenträgers der radial äußeren Kupplung
- 29: Nabe des Innenlamellenträgers der radial inneren Kupplung
- 30: Außenlamellenträger der radial äußeren Kupplung
- 31: Innenlamellenträger der radial inneren Kupplung
- 32: Innenlamellenträger der radial äußeren Kupplung und Außenlamellenträger der radial inneren Kupplung = gemeinsamer Innen/Außenlamellenträger
- 34: Betätigungskolben der radial äußeren Kupplung
- 35: Betätigungskolben der radial inneren Kupplung
- 36: Außenlamellen der radial äußeren Kupplung
- 37: Innenlamellen der radial äußeren Kupplung
- 38: Außenlamellen der radial inneren Kupplung
- 39: Innenlamellen der radial inneren Kupplung
- 41: erste Ringkuppe
- 42: zweite Ringkuppe
- 43: erste Ringkuppe
- 44: Innenverzahnung
- 45: Außenverzahnung
- 46: Außenverzahnung
- 47: Innenverzahnung
- 48: Überlappungsbereich
- 49: Kupplungsnabe
- 51: Verzahnung
- 52: Steckverzahnung
- 54: Kupplungsglocke
- 55: hohlzylinderförmiger Abschnitt
- 56: hohlzylinderförmiger Abschnitt
- 57: hohlzylinderförmiger Abschnitt
- 58: Außenverzahnung
- 59: Innenverzahnung
- K1: radial äußere Kupplung
- K2: radial innere Kupplung
- T: Torsionsschwingungsdämpfer
- ax: Drehachse

## Patentansprüche

1. Kupplungsanordnung (1) in radial geschachtelter Bauart
- mit einer Außenlamellen (36) und Innenlamellen (37) aufweisenden radial äußeren Lamellenkupplung (K1) und
- mit einer Außenlamellen (38) und Innenlamellen (39) aufweisenden radial inneren Lamellenkupplung (K2), wobei
- die radial äußere Lamellenkupplung (K1) und die radial innere Lamellenkupplung (K2) einen gemeinsamen Lamellenträger (32) aufweisen, welcher die Außenlamellen (38) der radial inneren Lamellenkupplung (K2) und die Innenlamellen (37) der radial äußeren Lamellenkupplung (K1) trägt,
**dadurch gekennzeichnet, dass**
eine gemeinsame Endscheibe (7) für die radial innere Lamellenkupplung (K2) und die radial äußere Lamellenkupplung (K1) vorgesehen ist.

2. Kupplungsanordnung (1) nach Anspruch 1,
**dadurch gekennzeichnet, dass**
der gemeinsame Lamellenträger (32) einen hohlzylinderförmigen Abschnitt (56) mit mäanderartigem Querschnitt aufweist, so dass außenumfangsseitig eine Außenverzahnung (46) zur Aufnahme einer Innenverzahnung (44) der Innenlamellen (37) der radial äußeren Lamellenkupplung (K1) und innenumfangsseitig eine Innenverzahnung (47) zur Aufnahme einer Außenverzahnung (45) der Außenlamellen (38) der radial inneren Lamellenkupplung (2) gebildet wird.

3. Kupplungsanordnung (1) nach Anspruch 1,
**dadurch gekennzeichnet, dass**
der gemeinsame Lamellenträger (32) als Form- oder Ziehteil ausgebildet ist.

4. Kupplungsanordnung (1) nach einem der Ansprüche 1 oder 2,
**dadurch gekennzeichnet, dass**
die gemeinsame Endscheibe (7) drehfest mit dem gemeinsamen Lamellenträger (32) verbunden ist oder dass die gemeinsame Endscheibe (7) einstückig mit dem gemeinsamen Lamellenträger (32) ausgeführt ist.

5. Kupplungsanordnung (1) nach Anspruch 4,
**dadurch gekennzeichnet, dass**
die gemeinsame Endscheibe (7) wenigstens eine Öffnung (16), vorzugsweise jedoch mehrere auf einem gedachten Kreis angeordnete Öffnungen (16) aufweist, durch welche entsprechende, vorzugsweise in Richtung zu einer Drehachse (ax) des gemeinsamen Lamellenträgers (32) ausgerichtete, Stege (17) geführt sind.

6. Kupplungsanordnung (1) nach einem der Ansprüche 4 oder 5,
**dadurch gekennzeichnet, dass**
der gemeinsame Lamellenträger (32) eine Umfangsnut (19) zur Aufnahme eines Sicherungsrings (18) aufweist, mit Hilfe dessen die Verschiebbarkeit der gemeinsame Endscheibe (7) in eine axiale Richtung (ax) begrenzt ist.

7. Kupplungsanordnung (1) nach einem der vorangehenden Ansprüche,
**dadurch gekennzeichnet, dass**
die gemeinsame Endscheibe (7) eine erste Ringkuppe (41, 43) aufweist, um einen mittleren Kraftangriffsradius an einer zu der gemeinsamen Endscheibe benachbarten Lamelle der radial äußeren Lamellenkupplung (K1) oder der radial inneren Lamellenkupplung (K2) einzustellen, wenn die erste Ringkuppe (41, 43) mit der benachbarten Lamelle der entsprechenden Lamellenkupplung (K1, K2) in Kontakt ist.

8. Kupplungsanordnung (1) nach Anspruch 7,
**dadurch gekennzeichnet, dass**
die gemeinsame Endscheibe (7) wenigstens eine weitere Ringkuppe (42) aufweist, um wenigstens einen weiteren mittleren Kraftangriffsradius an der zu der gemeinsamen Endscheibe (7) benachbarten Lamelle der entsprechenden Lamellenkupplung (K1) einzustellen, wenn die wenigstens eine weitere Ringkuppe (42) zusätzlich oder alternativ zu der ersten Ringkuppe (41) mit der benachbarten Lamelle der entsprechenden Lamellenkupplung (K1) in Kontakt ist.

9. Kupplungsanordnung (1) nach einem der vorangehenden Ansprüche,
**dadurch gekennzeichnet, dass**
die gemeinsame Endscheibe (7) als Formteil ausgebildet ist.

## Claims

1. Clutch arrangement (1) of radially nested design,
- having a radially outer multiplate clutch (K1) which has outer plates (36) and inner plates (37), and
- having a radially inner multiplate clutch (K2) which has outer plates (38) and inner plates (39), with
- the radially outer multiplate clutch (K1) and the radially inner multiplate clutch (K2) having a common plate carrier (32) which supports the outer plates (38) of the radially inner multiplate clutch (K2) and the inner plates (37) of the radially outer multiplate clutch (K1),
**characterized in that**
a common end disc (7) is provided for the radially inner multiplate clutch (K2) and the radially outer multiplate clutch (K2).

2. Clutch arrangement (1) according to Claim 1,
**characterized in that**
the common plate carrier (32) has a hollow cylindrical section (56) with a meandering cross section, such that, at the outer circumference, an external toothing (46) is formed for holding an internal toothing (44) of the inner plates (37) of the radially outer multiplate clutch (K2), and at the inner circumference, an internal toothing (47) is formed for holding an external toothing (45) of the outer plates (38) of the radially inner multiplate clutch (K2).

3. Clutch arrangement (1) according to Claim 1,
**characterized in that**
the common plate carrier (32) is formed as a moulded or drawn part.

4. Clutch arrangement (1) according to one of Claims 1 or 2,
**characterized in that**
the common end disc (7) is rotationally fixedly connected to the common plate carrier (32), or **in that** the common end disc (7) is formed in one piece with the common plate carrier (32).

5. Clutch arrangement (1) according to Claim 4,
**characterized in that**
the common end disc (7) has at least one opening (16), but preferably a plurality of openings (16) arranged on an imaginary circle, through which opening(s) (16) are guided corresponding webs (17) which are aligned preferably in the direction of a rotational axis (ax) of the common plate carrier (32).

6. Clutch arrangement (1) according to one of Claims 4 or 5, 1
**characterized in that**
the common plate carrier (32) has a circumferential groove (19) for holding a retaining ring (18), which retaining ring (18) serves to limit the mobility of the common end disc (7) in an axial direction (ax).

7. Clutch arrangement (1) according to one of the preceding claims,
**characterized in that**
the common end disc (7) has a first domed ring (41, 43) in order to set a mean radius of force engagement on a plate, which is adjacent to the common end disc, of the radially outer multiplate clutch (K1) or of the radially inner multiplate clutch (K2) when the first domed ring (41, 43) is in contact with the adjacent plate of the corresponding multiplate clutch (K1, K2).

8. Clutch arrangement (1) according to Claim 7,
**characterized in that**
the common end disc (7) has at least one further domed ring (42) in order to set at least one further mean radius of force engagement on the plate, which is adjacent to the common end disc (7), of the corresponding multiplate clutch (K1) when the at least one further domed ring (42) is in contact, in addition or alternatively to the first domed ring (41), with the adjacent plate of the corresponding multiplate clutch (K1).

9. Clutch arrangement (1) according to one of the preceding claims,
**characterized in that**
the common end disc (7) is formed as a moulded part.

## Revendications

1. Agencement d'embrayage (1) de construction emboîtée radialement,
- avec un embrayage multidisques (K1) radialement extérieur présentant des disques extérieurs (36) et des disques intérieurs (37), et
- avec un embrayage multidisques (K2) radialement intérieur présentant des disques extérieurs (38) et des disques intérieurs (39),
- l'embrayage multidisques (K1) radialement extérieur et l'embrayage multidisques (K2) radialement intérieur présentant un support de disques commun (32) qui porte les disques extérieurs (38) de l'embrayage multidisques (K2) radialement intérieur et les disques intérieurs (37) de l'embrayage multidisques (K1) radialement extérieur,
**caractérisé en ce**
**qu'**un plateau d'extrémité commun (7) est prévu pour l'embrayage multirisques (K2) radialement intérieur et l'embrayage multidisques (K1) radialement extérieur

2. Agencement d'embrayage (1) selon la revendication 1,
**caractérisé en ce que**
le support de disques commun (32) présente une portion (56) de forme cylindrique creuse avec une section transversale en méandres, de sorte que du côté périphérique extérieur, soit formée une denture extérieure (46) pour recevoir une denture intérieure (44) des disques intérieurs (37) de l'embrayage multidisques (K1) radialement extérieur et que du côté périphérique intérieur, soit formée une denture intérieur (47) pour recevoir une denture extérieure (45) des disques extérieurs (38) de l'embrayage multidisques (K2) radialement intérieur

3. Agencement d'embrayage (1) selon la revendication 1,
**caractérisé en ce que**
le support de disques commun (32) est réalisé sous forme de pièce moulée ou emboutie.

4. Agencement d'embrayage (1) selon l'une quelconque des revendications 1 ou 2,
**caractérisé en ce que**
le plateau d'extrémité commun (7) est connecté de manière solidaire en rotation au support de disques commun (32) ou **en ce que** le plateau d'extrémité commun (7) est réalisé d'une seule pièce avec le support de disques commun (32).

5. Agencement d'embrayage (1) selon la revendication 4,
**caractérisé en ce que**
le plateau d'extrémité commun (7) présente au moins une ouverture (16), de préférence toutefois plusieurs ouvertures (16) disposés sur un cercle imaginaire, à travers lesquelles sont guidées des nervures (17) correspondantes, orientées de préférence dans la direction d'un axe de rotation (ax) du support de disques commun (32).

6. Agencement d'embrayage (1) selon l'une quelconque des revendications 4 ou 5,
**caractérisé en ce que**
le support de disques commun (32) présente une rainure périphérique (19) pour recevoir une bague de fixation (18), à l'aide de laquelle la mobilité du plateau d'extrémité commun (7) dans une direction axiale (ax) est limitée.

7. Agencement d'embrayage (1) selon l'une quelconque des revendications précédentes,
**caractérisé en ce que**
le plateau d'extrémité commun (7) présente une première coupe annulaire (41, 43) pour ajuster un rayon d'application de force moyen à un disque, adjacent au plateau d'extrémité commun, de l'embrayage multidisques (K1) radialement extérieur ou de l'embrayage multidisques (K2) radialement intérieur, lorsque la première coupe annulaire (41, 43) est en contact avec le disque adjacent de l'embrayage multidisques correspondant (K1, K2).

8. Agencement d'embrayage (1) selon la revendication 7,
**caractérisé en ce que**
le plateau d'extrémité commun (7) présente au moins une autre coupe annulaire (42), afin d'ajuster au moins un autre rayon d'application de force moyenne au disque, adjacent au plateau d'extrémité commun (7), de l'embrayage multidisques (K1) correspondant lorsque l'au moins une autre coupe annulaire (42) est en contact avec le disque adjacent de l'embrayage multidisques correspondant (K1) en plus ou à la place de la première coupe annulaire (41).

9. Agencement d'embrayage (1) selon l'une quelconque des revendications précédentes,
**caractérisé en ce que**
le plateau d'extrémité commun (7) est réalisé sous forme de pièce moulée.
